# EUROPÄISCHE PATENTSCHRIFT

(11) **EP 2 623 257 B1**
(45) Veröffentlichungstag und Bekanntmachung des Hinweises auf die Patenterteilung: **01.07.2015**
(21) Anmeldenummer: 13153471.1
(22) Anmeldetag: 31.01.2013
(51) Int. Cl.: B23Q 1/52, B23Q 39/02, B23Q 17/22, B23Q 11/00

(54) **Werkzeugmaschine mit einer Positionsausgleichsvorrichtung**
Position compensation device in a machine tool
machine-outil avec un dispositif d'équilibrage de position

(30) Priorität: 02.02.2012 AT 1432012
(43) Veröffentlichungstag der Anmeldung: 07.08.2013
(73) Patentinhaber: "HPC" Produktions GmbH, 9871 Seeboden (AT)
(72) Erfinder: Kranabether, Gunther, 9701 Rothenthurn (AT); Prodinger, Wolfgang, 9220 Velden am Wörthersee (AT); Schusteritsch, Karl, 9872 Millstatt (AT); Winkler, Bernd, 4490 St. Florian (AT)
(74) Vertreter: Burger, Hannes

(56) Entgegenhaltungen:
- WO-A1-2005/025801
- DE-A1-102006 035 248

## Beschreibung

Die Erfindung betrifft eine Werkzeugmaschine mit einer Positionsausgleichsvorrichtung , welche Werkzeugmaschine einen Mehrspindel-Bearbeitungskopf und einen Werkstückträger aufweist, welche in einem Maschinenrahmen fixiert angeordnet sind.

In Werkzeugmaschinen, insbesondere in Werkzeugmaschinen mit einem Mehrspindel-Bearbeitungskopf sind geometrische Verhältnisse durch die konstruktive Ausgestaltung des Mehrspindel-Bearbeitungskopfes festgelegt.

In einem Mehrspindel-Bearbeitungskopf sind zumindest zwei Werkzeugspindeln in einer festen Relativposition zueinander angeordnet, wobei eine Anpassung der Position der durch die zumindest zwei Werkzeugspindeln festgelegten Bearbeitungsachsen zueinander nicht möglich ist.. Im Falle der Mehrfachbearbeitung (bspw. Doppel- oder Dreifachbearbeitung) ist es erforderlich, einzelne Spindelpositionen zum Ausgleich von Summentoleranzen, bspw. durch Temperaturausdehnung oder Spannfehler, zu korrigieren, da der große Vorteil von Mehrspindel-Bearbeitungsköpfen genau darin liegt, dass gleichzeitig eine Mehrzahl von Bearbeitungsvorgängen ausgeführt werden können. Von Nachteil ist dabei jedoch, dass sich eine Positionsabweichung einer Bearbeitungsachse einer Werkzeugspindel nur mit großem Aufwand korrigieren lässt. Beispielsweise kann es durch Ungenauigkeiten beim Positionieren der Werkzeugspindel im Mehrspindel-Bearbeitungskopf bzw. bei der Positionierung des Werkstücks am Werkstückträger zu einer Abweichung der geometrischen Verhältnisse zwischen einer Bearbeitungsposition am Werkstück und der Bearbeitungsachse der diese Bearbeitung durchführenden Werkzeugspindel kommen. Auch kann es beispielsweise zu einer temperaturbedingten Änderung der Geometrie zwischen den zumindest zwei Werkstückspindeln kommen. Da aber die äußere Geometrie durch den Maschinenrahmen festgelegt ist, würde sich somit unmittelbar eine Ungenauigkeit der Bearbeitung des Werkstücks ergeben. Eine Abweichung der Bearbeitungsachse einer einzelnen Werkzeugspindel könnte gegebenenfalls noch in den geforderten Toleranzgrenzen des zu bearbeitenden Werkstücks liegen. Bei einem Mehrspindel-Bearbeitungskopf wird jedoch zumeist eine Mehrzahl von Werkzeugspindeln vorhanden sein, sodass sehr schnell die zulässigen Abweichungstoleranzen überschritten werden und eine Neujustage des gesamten Bearbeitungskopfes erforderlich wird. Eine Neujustage eines Mehrspindel-Bearbeitungskopfes ist zumeist mit einem sehr großen Aufwand verbunden, da gegebenenfalls der Mehrspindel-Bearbeitungskopf aus der Werkzeugmaschine ausgebaut werden muss. In jedem Fall ist die Werkzeugmaschine in dieser Zeit nicht betriebsbereit und verursacht somit hohe Stillstandskosten. Aus dem Stand der Technik ist bekannt, einen Positionsausgleich von Werkzeugspindeln in einem Mehrspindel-Bearbeitungskopf durch Beilegen entsprechender Ausgleichsplättchen in der Aufnahmevorrichtung der Werkzeugspindel durchzuführen. Durch derartige Ausgleichsmaßnahmen können jedoch nur statische Abweichungen ausgeglichen werden, dynamische Abweichungen, wie sie beispielsweise thermisch bedingt auftreten können, lassen sich mit derartigen Maßnahmen nicht korrigieren. Auch bedingt dieser Positionsausgleich eine Demontage der betroffenen Werkzeugspindeln bzw. des gesamten Bearbeitungskopfs.

Zu einer automatischen Korrektur der Achsposition einer Werkzeugspindel ist beispielsweise aus der EP 1 638 720 B1 eine Vorrichtung mit einem Exzenterring offenbart. Dabei wird eine lineare Antriebsbewegung eines Stellelements in eine Drehbewegung und aufgrund der exzentrischen Lagerung, in eine Positionsverschiebung umgesetzt. Der erforderliche Aufwand für die Umsetzung der Linear- in eine Drehbewegung und der konstruktive Aufwand für die Ausbildung der Exzenterscheiben ist insbesondere im Hinblick auf Mehrspindelköpfe, mit einer Vielzahl einzelner Werkzeugspindeln, von Nachteil, da somit die Kosten deutlich ansteigen werden. Ferner ist ein beträchtlicher Aufwand für die Anordnung der Ansteuervorrichtung erforderlich, was sich auf das Gewicht eines Mehrspindel-Bearbeitungskopfes negativ auswirkt und somit auch der Maschinenrahmen wesentlich stabiler ausgebildet sein muss.

Aus der EP 1 882 548 B1 ist eine ähnliche Vorrichtung bekannt, wobei eine Taumelscheibe eingesetzt wird, die synchron zur Drehzahl der Werkzeugspindeln angesteuert wird und somit dynamisch eine Positionsungenauigkeit ausgleichen kann.

Aus der DE 89 04 006 U ist eine Wellenlagerung bekannt, wobei auf ein Wälzlager mit einem Außen- und einem Innenring, in Abhängigkeit von der Drehzahl der Welle, eine Druckflüssigkeit einwirkt. Der Druck dieser Druckflüssigkeit wird dabei derart gewählt, dass dieser einer erfassten Belastung auf das Wälzlager proportional ist.

Zum Ausgleich der Z-Richtung, also zur Richtung längs der Drehachse einer Werkzeugspindel, ist beispielsweise aus der DE 10 2009 031 428 A bekannt, dass ein hydraulisches Druckelement auf eine Kegelstumpflagerung einwirkt und somit durch Druckbeaufschlagung eine Verschiebung der Werkzeugaufnahme längs dieser Z-Richtung möglich wird.

Aus dem Stand der Technik ist ferner bekannt, piezoelektrische Elemente in der Lagerung einer Werkzeugspindel anzuordnen, wie dies beispielsweise in der DE 198 59 360 A1 offenbart ist.

Dokument DE 10 2006 035248 A1 offenbart ein Verfahren zum Ausgleich von Temperaturschwankungen bzw. Temperaturdifferenzen an Bearbeitungsmaschinen, welche Temperaturunterschiede Maßdifferenzen des Achsabstandes von wenigstens zwei parallel zueinander angeordneten Arbeitsspindeln verursachen. Die beiden Arbeitsspindeln sind jeweils auf einer Bearbeitungseinheit angeordnet. Die beiden Bearbeitungseinheiten sind längs einer Führung verschiebbar ausgeführt, wobei die Verschubbewegung von einem Spindelantrieb über einen Mitnehmer auf die erste Bearbeitungseinheit wirkt. Über eine Abstandsänderungsvorrichtung wirkt die Vorschubbewegung auf die zweite Bearbeitungseinheit. In der Abstandsänderungsvorrichtung ist ein Druckelement vorgesehen, um die temperaturbedingte Abstandsänderung ausgleichen zu können.

Untersuchungen, die im Zuge der Entwicklung der gegenständlichen Positionsausgleichsvorrichtung durchgeführt wurden, haben gezeigt, dass piezoelektrische Elemente für den gegenständlichen Anwendungsfall ungeeignet sind. Derartige Piezo-Elemente, welche eine entsprechende Stellleistung und Positioniergenauigkeit aufweisen, um in Werkzeugmaschinen eingesetzt zu werden, sind einerseits sehr teuer und bringen andererseits insbesondere eine Festlegung bzw. Abhängigkeit auf wenige Hersteller solcher Piezo-Elemente mit sich. Während der Kostenfaktor für Werkzeugmaschinen mit nur wenigen Werkzeugspindeln von untergeordneter Bedeutung ist, gewinnt er bei Mehrspindel-Bearbeitungsköpfen mit zumeist mehreren Werkzeugspindeln eine wesentliche Bedeutung.

Ein weiterer Punkt der gegen den Einsatz von piezoelektrischen Elementen spricht, betrifft die Steifigkeit eines derartigen Systems. Der Vorteil der sich durch eine Einzelverstellbarkeit einer Werkzeugspindel ergibt, soll nicht durch den zusätzlichen Aufwand zur Fixierung der Position nach der Verstellung bzw. zur Beibehaltung der Position bei dynamischer Verstellung verloren gehen.

Die Aufgabe der Erfindung liegt nun darin, eine Vorrichtung zu schaffen, welche in einem Mehrspindel-Bearbeitungskopf die Position der Arbeitsachse einer Werkzeugspindel zumindest in eine Arbeitsrichtung anpassen kann und dabei eine hohe Steifigkeit gegenüber den auftretenden Belastungen aufweist. Die Positioniervorrichtung soll derart ausgebildet sein, dass auch jede einzelne Werkzeugspindel eines Mehrspindel-Bearbeitungskopfes positionierbar ausgeführt sein kann. Insbesondere ist es Aufgabe der Erfindung, die Positioniervorrichtung derart auszubilden, dass einerseits ein einfacher und damit kostengünstiger Aufbau erreicht wird und dass ferner eine einfache Wartung gewährleistet ist.

Die Aufgabe der Erfindung wird durch eine Werkzeugmaschine mit einer Positionsausgleichvorrichtung, welche Werkzeugmaschine einen Mehrspindel-Bearbeitungskopf und einen Werkstückträger aufweist, welche in einem Maschinenrahmen fixiert angeordnet sind. Der Maschinenrahmen legt dabei eine Geometrie mit mindestens einer bewegbaren Achse zwischen Werkstückträger und Mehrspindel-Bearbeitungskopf fest. Im Mehrspindel-Bearbeitungskopf sind räumlich voneinander distanziert, zumindest zwei Werkzeugspindeln angeordnet, zumindest eine Werkzeugspindel ist in einer Aufnahmevorrichtung angeordnet, ferner weist der Werkstückträger eine Werkstückhalterung auf, welche ein zu bearbeitendes Werkstück in einer Relativposition zum Werkstückträger aufnimmt.

Als Ebene des Mehrspindel-Bearbeitungskopfes wird hierin eine Ebene verstanden, die dem zu bearbeitenden Werkstück zugewandt ist und aus der die, in den Werkzeugspindeln bzw. in Werkzeugaufnahmen der Werkzeugspindel aufgenommenen Werkzeuge herausragen. Die Ebene kann bspw. durch eine Planfläche des Bearbeitungskopfes gebildet sein, es ist jedoch auch möglich, dass diese Ebene durch eine gedachte Ebene gebildet ist. Im Weiteren wird darunter verstanden, dass die Ebene auch durch zwei Bearbeitungsachsen (bspw. X und Y) aufgespannt sein kann, wobei dies nicht zwingend erforderlich ist.

Durch die spezifische Konstruktion einer Werkzeugmaschine mit einem Mehrspindel-Bearbeitungskopf sind die geometrischen Verhältnisse zwischen dem Bearbeitungskopf und dem Werkstück, insbesondere jedoch zwischen jeder einzelnen Werkzeugspindel und dem Werkstück, festgelegt. Auf konstruktive Details einer Werkzeugmaschine mit einem Mehrspindel-Bearbeitungskopf wird hierin nicht weiter eingegangen, da dies aus dem Fachwissen bekannt ist.

Da nun zwischen zumindest der Aufnahmevorrichtung einer Werkzeugspindel und dem Mehrspindel-Bearbeitungskopf, mit einer ersten Wirkrichtung parallel zur Ebene des Mehrspindel-Bearbeitungskopfes, ein Druckelement angeordnet ist, kann die Aufnahmevorrichtung in diese Richtung gezielt verschoben werden. Zur Vereinfachung wird als erste Wirkrichtung eine Richtung parallel zur X-Koordinate verstanden. Durch diese Ausbildung ist ein Ausgleich einer Positionsabweichung möglich, wie sie bspw. durch Abnutzung und/oder thermische Ausdehnungseffekte während des bestimmungsgemäßen Betriebs auftreten kann.

Von Vorteil ist eine Ausbildung, nach der das Druckelement als hydraulisches Druckelement ausgebildet ist, insbesondere als hydraulische Druckdose. Ein Hydraulikelement ermöglicht mit der gegenständlichen Ausführung der Positionsausgleichsvorrichtung eine besonders hohe Steifigkeit der Vorrichtung zu erreichen, da Flüssigkeiten weitestgehend inkompressibel sind und damit eine zuverlässige Positionierung unter Last möglich ist. Auch ist es mit dieser Ausbildung nicht erforderlich, dass zusätzliche Klemmvorrichtungen erforderlich sind, um die bewegte Komponente in Position zu halten, auch während der Durchführung der Bearbeitungsschritte.

In einer Weiterbildung ist vorgesehen, dass zwischen der Aufnahmevorrichtung und dem Mehrspindel-Bearbeitungskopf, zwei Druckelemente mit derselben ersten Wirkrichtung angeordnet sind, bevorzugt jeweils zwischen der Aufnahmevorrichtung und dem Mehrspindel-Bearbeitungskopf. In einer Ausführung kann somit die Aufnahmevorrichtung zwischen zwei Druckelementen angeordnet sein, die Druckelemente sind jeweils andererseits mit dem Mehrspindel-Bearbeitungskopf verbunden. Damit wird eine Klemmung der Aufnahmevorrichtung erreicht. Es können die beiden Druckelemente auch in Serie, hintereinander liegend angeordnet sein, um somit eine größere Auslenkung zu erreichen. Ferner ist es möglich, dass ein Druckelement eine Grobverstellung ermöglicht, das zweite Druckelement ermöglicht eine feine Anpassung des Verstellwegs.

Zur Erreichung eines Positionsausgleichs in eine von der ersten Wirkrichtung abweichende zweite Wirkrichtung, ist vorgesehen, dass die Aufnahmevorrichtung durch einen Rahmen gebildet ist, wobei zwischen dem Rahmen und einem Spindelträger zur Aufnahme der Werkzeugspindel, ein in eine zweite Wirkrichtung wirkendes Druckelement angeordnet ist.

Nach einer Weiterbildung ist ferner vorgesehen, dass das in die zweite Wirkrichtung wirkende Druckelement als hydraulisches Druckelement ausgebildet ist, insbesondere als hydraulische Druckdose.

Eine Weitbildung besteht ferner darin, dass zwischen dem Rahmen und dem Spindelträger, zwei Druckelemente mit derselben zweiten Wirkrichtung angeordnet sind, bevorzugt jeweils zwischen dem Rahmen und dem Spindelträger. Analog einer vorherigen Beschreibung ist mit dieser Ausbildung eine Klemmung des Rahmens möglich. Auch kann wiederum durch Serienschaltung eine Vergrößerung der Auslenkung erreicht werden.

Nach einer Weiterbildung ist vorgesehen, dass die zweite Wirkrichtung in der Ebene der ersten Wirkrichtung liegt, wobei die beiden Wirkrichtungen einen Winkel zueinander einschließen, bevorzugt 90°.

Nach einer Weiterbildung ist es möglich, dass zwischen dem Mehrspindel-Bearbeitungskopf und der Aufnahmevorrichtung zwei Paare, an der Aufnahmevorrichtung jeweils gegenüberliegend angeordnete Druckelemente, vorhanden sind, wobei deren jeweils erste Wirkrichtung gegeneinander beabstandet ist.

Eine Weiterbildung besteht ferner darin, dass zwischen dem Rahmen und dem Spindelträger zwei Paare, an dem Spindelträger jeweils gegenüberliegend angeordnete Druckelemente, vorhanden sind, wobei deren jeweils zweite Wirkrichtung gegeneinander beabstandet ist.

Mit diesen beiden Ausbildungen wird die Aufnahmevorrichtung bzw. der Rahmen geklemmt und durch die beabstandete Anordnung der Druckelementpaare wird eine Symmetrierung des Kraftangriffs erreicht.

Eine Weiterbildung besteht darin, dass die beiden, auf der ersten und/oder zweiten Wirkrichtung liegenden Druckelemente, jeweils mit einem Druckregelventil verbunden sind. Damit wird eine individuelle Ansteuerung jedes einzelnen Druckelements erreicht, sodass durch eine entsprechende Druckbeaufschlagung ein individueller Kraftvektor ausgebildet werden kann. Mit einer gegenständlichen Weiterbildung der Anordnung der Druckelemente an der Aufnahmevorrichtung und/oder dem Rahmen, kann somit auch eine Verdrehung ausgebildet werden.

Mit einer Weiterbildung, nach der die beiden benachbarten Druckelemente der zwei Paare jeweils über eine gemeinsame Druckleitung mit dem Druckregelventil verbunden sind wird erreicht, dass die Druckelemente jeweils einer Seite der Aufnahmevorrichtung und/oder des Rahmens nach dem Prinzip der verbundenen Gefäße gleich angesteuert werden und somit die gleiche Kraft ausüben. Damit wird gewährleistet, dass sich die Aufnahmevorrichtung bzw. der Rahmen genau parallel zur ersten bzw. zweiten Wirkrichtung bewegt.

Eine Weiterbildung liegt darin, dass zwischen dem Spindelträger und dem Mehrspindel-Bearbeitungskopf eine Positionserfassungsvorrichtung angeordnet ist, welche zur Erfassung eines Abstands parallel zur ersten und/oder zweiten Wirkrichtung ausgebildet ist. Aufgrund der spezifischen Ausgestaltung eines Mehrspindel-Bearbeitungskopfs und der damit am Werkstück durchführbaren Bearbeitungsschritte kann es sein, dass nur für einige Werkzeugspindeln eine Positionsabweichung gegeben ist. Bei einem Mehrspindel-Bearbeitungskopf werden zumeist nicht alle Werkzeugspindeln gleichzeitig das am Werkstückträger aufgespannte Werkstück bzw. die am Werkstückträger aufgespannten Werkstücke bearbeiten. Daher ist ein Positionsausgleich nur dann erforderlich, wenn ein Bearbeitungsschritt eine Werkzeugspindel erfordert, bei der zwischen der Soll-Bearbeitungsposition am Werkstück und der Bearbeitungsachse der Werkzeugspindel, eine Abweichung besteht.

Dahingehend ist auch eine Weiterbildung von Vorteil, nach der eine Auswerteschaltung vorhanden ist, welche aus einem dynamisch ermittelten Abstandswert ein Ansteuersignal zur Druckbeaufschlagung eines Druckelements erzeugt. Mit dieser Weiterbildung können auch dynamische Positionsschwankungen, wie sie bspw. durch ein abgenutztes Lager auftreten, kompensiert werden.

Für hoch belastete Werkzeugmaschinen, oder wenn die Druckstabilität eines Druckelements nicht ausreicht, um die bei der Bearbeitung eines Werkstücks auftretenden Kräfte aufzunehmen, ist eine Weiterbildung von Vorteil, nach der zwischen der Aufnahmevorrichtung und dem Mehrspindel-Bearbeitungskopf und/oder zwischen dem Spindelträger und dem Mehrspindel-Bearbeitungskopf eine Klemmvorrichtung angeordnet ist. Damit kann bei gelöster Klemmvorrichtung der Positionsausgleich durchgeführt werden und dann die Klemmvorrichtung aktiviert werden, so dass eine quasi feste Verbindung gebildet wird, welche die auftretenden Kräfte auf den Bearbeitungskopf bzw. auf den Maschinenrahmen ableitet. Die Klemmvorrichtung kann bspw. elektromagnetisch oder hydraulisch wirkend ausgebildet sein.

Nach einer Weiterbildung ist es ferner möglich, dass das Druckelement auch als elektrisches Druckelement ausgebildet ist, insbesondere als Piezoelement.

Zum besseren Verständnis der Erfindung wird diese anhand der nachfolgenden Figuren näher erläutert.

Es zeigen jeweils in stark schematisch vereinfachter Darstellung:
- Fig. 1: Eine schematische Darstellung der gegenständlichen Positionsausgleichsvorrichtung in einer mit Mehrspindelköpfen ausgestatteten Werkzeugmaschine;
- Fig. 2: Eine mögliche Ausführung der gegenständlichen Positionsausgleichsvorrichtung;
- Fig. 3: Eine weitere mögliche Ausführung der gegenständlichen Positionsausgleichsvorrichtung;
- Fig. 4: Ein hydraulisches Ansteuerungsschema zur Positionseinstellung mögliche mit der gegenständlichen Positionsausgleichsvorrichtung.

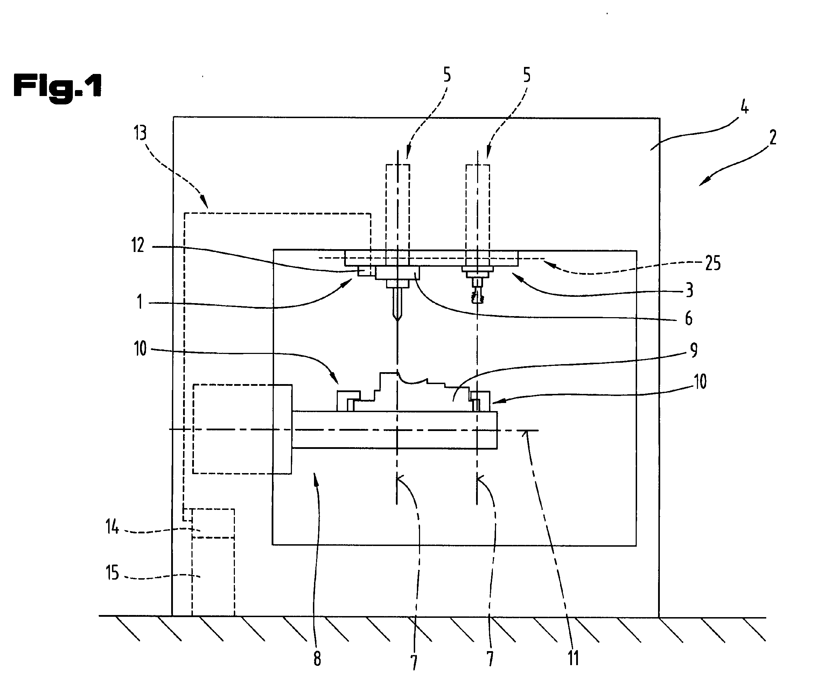

Fig. 1 zeigt eine gegenständliche Positionsausgleichsvorrichtung 1 in einer Werkzeugmaschine 2, insbesondere einer Werkzeugmaschine 2 mit einem Mehrspindel-Bearbeitungskopf 3, wobei der Mehrspindel-Bearbeitungskopf 3 in einem Maschinenrahmen 4 fixiert angeordnet ist.

Der Mehrspindel-Bearbeitungskopf 3 weist zumindest zwei räumlich voneinander distanziert angeordnete Werkzeugspindeln 5 auf, von denen zumindest eine Werkzeugspindel in einer Aufnahmevorrichtung 6 angeordnet ist. Jede Werkzeugspindel 5 weist eine Aufnahme für ein Bearbeitungswerkzeug auf, ferner ist durch jede Werkzeugspindel eine Bearbeitungsachse 7 festgelegt, wobei unter dieser Bearbeitungsachse 7 gemäß den Konventionen im Werkzeugmaschinenbau, eine Vorschub-Achse, oft die Z-Achse, verstanden wird.

Im Maschinenrahmen 4 ist ferner ein Werkstückträger 8 angeordnet, auf dem ein zu bearbeitendes Werkstück 9 mittels einer Werkstückhalterung 10 angeordnet ist. In der bevorzugten Ausbildung wird auch durch den Werkstückträger 8 eine bewegbare Bearbeitungsachse 11 ausgebildet, der Werkstückträger 8 kann das Werkstück 9 in Z-Richtung auf den Mehrspindel-Bearbeitungskopf 3 hinzu- oder wegbewegen und in X- und/oder Y-Richtung relativ dazu bewegen. Die einzelnen in den Werkzeugspindeln 5 aufgenommenen Bearbeitungswerkzeuge können somit gleichzeitig mehrere Abschnitte am Werkstück 9 bearbeiten. Bevorzugt ist eine Rotation des Werkstückträgers 8 um diese erste Drehachse 11 möglich, so dass das aufgespannte Werkstück 9 in Relation zu den Bearbeitungswerkzeugen verschwenkt werden kann.

Der dargestellte Fall mit nur zwei Werkzeugspindeln 5 wurde lediglich aus Vereinfachungsgründen gewählt, zumeist weist ein Mehrspindel-Bearbeitungskopf mehrere Werkzeugspindeln auf, sodass gleichzeitig eine Vielzahl unterschiedlicher oder gegebenenfalls gleichartiger Bearbeitungsschritte durchgeführt werden können.

Es ist auch möglich, dass der Werkstückträger mehr als ein Werkstück aufnehmen kann. Diese Werkstücke können einzeln, hintereinander oder gleichzeitig dem Mehrspindel-Bearbeitungskopf zugeführt werden.

Da nun durch den bestimmungsgemäßen Betrieb Abweichungen der Bearbeitungsachsen 7 von der geforderten Sollposition entstehen können, ist gemäß der gegenständlichen Positionsausgleichsvorrichtung vorgesehen, dass zwischen dem Mehrspindel-Bearbeitungskopf 3 und der Aufnahmevorrichtung 6 einer Werkzeugspindel 5, ein Druckelement 12 angeordnet ist. Dieses Druckelement 12 ist dazu ausgebildet, die Aufnahmevorrichtung 6 und damit die Position der Bearbeitungsachse 7 in Relation zum Mehrspindel-Bearbeitungskopf 3 zu verstellen, zumindest in eine Richtung in der Ebene 25 des Mehrspindel-Bearbeitungskopfes 3. Bevorzugt ist das Druckelement 12 als hydraulische Druckdose ausgebildet, welche über eine Druckleitung 13 und ein Druckregelventil 14, mit einem hydraulischen Druckerzeuger 15 verbunden ist. Der Vorteil von einem hydraulischen Druckelement 12 liegt darin, dass bei einer hohen Positioniergenauigkeit von ca. 1 µm, eine sehr hohe Steifigkeit von >1000 N/µm möglich ist. Somit ist es möglich, die Positionsverstellung durchzuführen und diese Position auch ohne zusätzliche Halte- bzw. Klemmelemente während des Betriebs aufrecht zu erhalten.

Aufgrund der einfachen und kostengünstigen Ausführung der gegenständlichen Positionsausgleichsvorrichtung ist es möglich, jede einzelne Werkzeugspindel 5 eines Mehrspindel-Bearbeitungskopfes 3 mit einer Positionsausgleichsvorrichtung 1 auszustatten, sodass eine individuelle Anpassung bzw. Korrektur von Positionsabweichungen für jede einzelne Werkzeugspindel 5 durchgeführt werden kann. Mit der bevorzugten Ausführung einer hydraulischen Druckdose kann ein Positionsausgleich von +/- 50 µm erreicht werden.

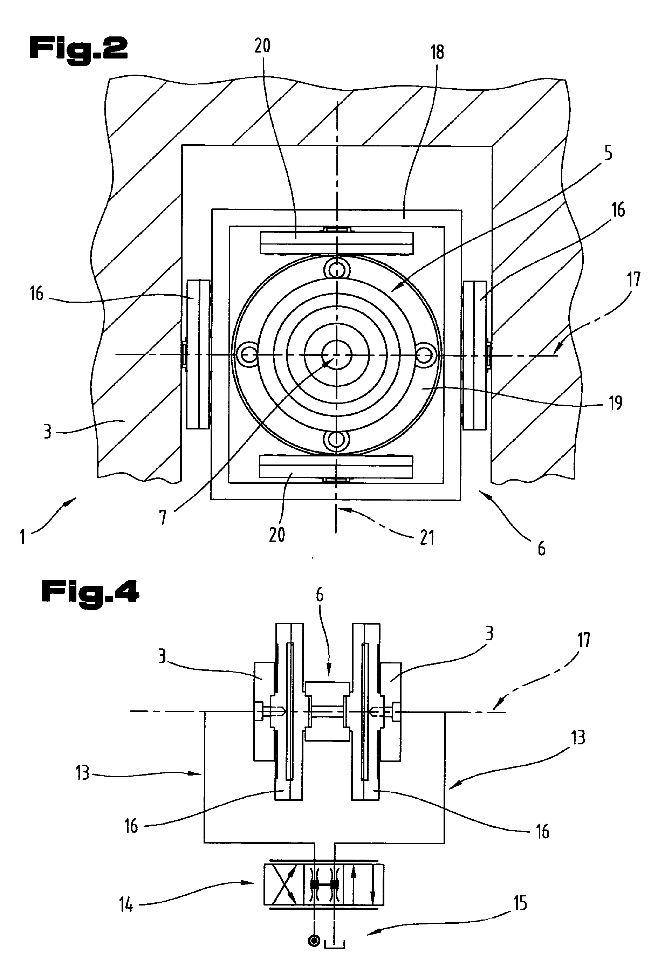

Fig. 2 zeigt eine mögliche Ausführung der gegenständlichen Positionsausgleichsvorrichtung 1. Die Darstellung zeigt eine Draufsicht auf eine Werkzeugspindel 5, welche in einer Aufnahmevorrichtung 6 angeordnet ist. Zwischen dem Mehrspindel-Bearbeitungskopf 3 und der Aufnahmevorrichtung 6 ist jeweils ein Druckelement 16 angeordnet, wobei die beiden Druckelemente gegenüberliegend und auf derselben ersten Wirkrichtung 17 angeordnet sind.

Im Weiteren wird vereinbart, dass die erste Wirkrichtung 17 der X-Vorschubrichtung entspricht. Durch die gegenüberliegende Anordnung der Druckelemente 16 wird eine Klemmung der Aufnahmevorrichtung 6 in Bezug zum Bearbeitungskopf 3 erreicht, insbesondere kann somit eine hohe Steifigkeit erreicht werden, indem beide Druckelemente 16 mit Druck beaufschlagt werden, wobei durch Ausbilden einer Druckdifferenz zwischen den beiden Druckelementen, eine Veränderung der Position der Aufnahmevorrichtung 6 längs der ersten Wirkrichtung 17 erreicht werden kann. Durch Aufrechterhaltung des Drucks bzw. der Druckdifferenz, wird die Aufnahmevorrichtung 6 in dieser Position fixiert, ohne dass eine zusätzliche Klemmvorrichtung vorhanden sein müsste.

Im dargestellten Fall ist die Aufnahmevorrichtung 6 durch einen Rahmen 18 gebildet, wobei gemäß einer Weiterbildung zwischen dem Rahmen 18 und einem Spindelträger 19 der Werkzeugspindel 5, Druckelemente 20 angeordnet sind. Diese beiden Druckelemente 20 sind mit selber zweiter Wirkrichtung 21 dem Spindelträger 19 der Werkzeugspindel 5 gegenüberliegend angeordnet und bewirken somit eine Klemmung des Spindelträgers 19 in Bezug zum Rahmen 18. Bevorzugt schließen die erste Wirkrichtung 17 und die zweite Wirkrichtung 21 einen rechten Winkel ein, sodass die zweite Wirkrichtung 21 der Y-Vorschubrichtung einer Werkzeugmaschine entspricht. Der Schnittpunkt der ersten 17 und zweiten 21 Wirkrichtung entspricht somit der Z-Bearbeitungsachse 7.

Die zuvor beschriebenen Vorteile und Funktionsweisen der in erster Wirkrichtung 17 angeordneten Druckelemente 16 lassen sich direkt auf die in zweiter Wirkrichtung 21 wirkenden Druckelemente 20 übertragen.

Zur besseren Unterscheidung werden in den Figuren die Druckelemente mit unterschiedlichen Bezugszeichen gekennzeichnet. Dies bedeutet jedoch nicht, dass es sich dabei um unterschiedliche Typen von Druckelementen handeln muss. Damit soll lediglich ein Richtungsbezug eingeführt werden, um die Druckelemente im Bezug zu deren Wirkrichtung eindeutig beschreiben zu können. In Figur 1 kennzeichnet Bezugszeichen 12 ein Druckelement ohne einen konkreten Richtungsbezug. In den folgenden Figuren kennzeichnet Bezugszeichen 16 jene Druckelemente, deren Wirkrichtung in Richtung der ersten Wirkrichtung 17 ausgerichtet ist. Entsprechend kennzeichnet Bezugszeichen 20 jene Druckelemente, deren Wirkrichtung in Richtung der zweiten Wirkrichtung 21 ausgerichtet ist.

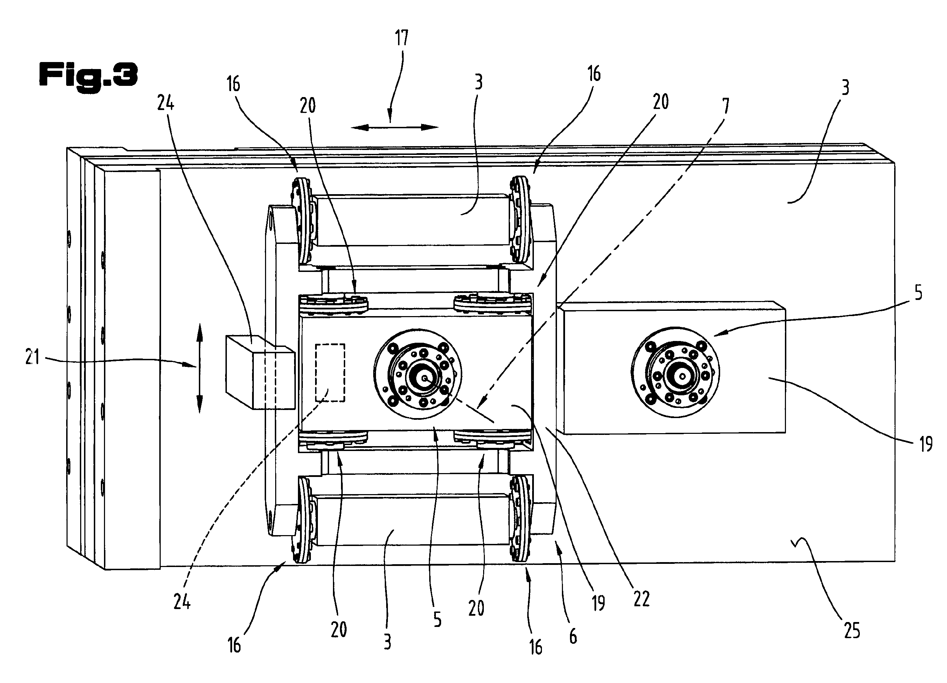

Fig. 3 zeigt eine weitere mögliche Ausführung der gegenständlichen Positionsausgleichsvorrichtung 1. In dem dargestellten Mehrspindel-Bearbeitungskopf 3 sind aus Vereinfachungsgründen lediglich zwei Werkzeugspindeln 5 angeordnet. Beide jeweils in einem Spindelträger 19, wobei die linke Werkzeugspindel 5 zusätzlich in einer Aufnahmevorrichtung 6 angeordnet ist und in der Ebene 25 des Bearbeitungskopfes 3 beweglich ist. Die Aufnahmevorrichtung 6 ist dabei durch einen doppel-H-artigen Rahmen 22 gebildet. Zwischen dem Rahmen 22 und dem Mehrspindel-Bearbeitungskopf 3 sind Druckelemente 16 angeordnet, welche bei Druckbeaufschlagung den Rahmen 22 in Richtung der ersten Wirkrichtung 17 bewegen können. Rechtwinkelig dazu sind zwischen dem Rahmen 22 und dem Spindelträger 19 ebenfalls Druckelemente 20 angeordnet, welche den Spindelträger 19 relativ zum Rahmen 22 in Richtung der zweiten Wirkrichtung 21 verschieben können. Somit kann die Position der Bearbeitungsachse 7 relativ zum Bearbeitungskopf 3 und damit insbesondere zur rechten, dargestellten Werkzeugspindel 5, welche über ihren Spindelträger 19 unveränderlich mit dem Mehrspindel-Bearbeitungskopf verbunden ist, verschoben werden.

In der Fig. 3 lediglich schematisch dargestellt, ist ferner eine Positionserfassungsvorrichtung 23 vorhanden, welche eine Position der Bearbeitungsachse 7 einer Werkzeugspindel 5, in Relation zum Mehrspindel-Bearbeitungskopf 3 erfassen kann. Die Positionserfassungsvorrichtung wird bevorzugt zwischen dem Spindelträger 19 und dem Mehrspindel-Bearbeitungskopf 3 angeordnet und kann integriert ausgebildet sein und somit eine Relativposition der Bearbeitungsachse 7 in den beiden Richtungskomponenten der ersten 17 und zweiten 21 Wirkrichtung erfassen.

Die Positionserfassungsvorrichtung kann beispielsweise als Wirbelstromsensor ausgebildet sein und erfasst dabei eine Längsbewegung, Wegänderung oder eine lineare Wegänderung. Diese Längsbewegung oder Wegänderung kann nun absolut zu einem Referenzpunkt bspw. am Maschinenrahmen, oder als Relativbewegung zu einem festlegbaren Start-Referenzwert ermittelt werden. Damit ist eine kontinuierliche Erfassung der Position der Bearbeitungsachse 7 möglich, insbesondere auch beim Betrieb der zu positionierenden Werkzeugspindel 5. Des Weiteren kann die Positionserfassungsvorrichtung auch als Messtaster, nach dem LVDT oder potenziometrischen Messprinzip ausgebildet sein.

Gemäß einer Weiterbildung kann vorgesehen sein, dass zwischen der Aufnahmevorrichtung 6 und dem Mehrspindel-Bearbeitungskopf 3 und/oder zwischen dem Spindelträger 19 und dem Mehrspindel-Bearbeitungskopf 3 eine Klemmvorrichtung 24 angeordnet sein. Mit den Druckelementen 16, 20 kann nur eine bestimmte Maximalkraft aufgebracht werden, die von den, bei der Bearbeitung eines Werkstücks auftretenden Kräften auf die Werkzeugspindel 5 überschritten werden, so dass die Gefahr eines Verlusts der eingestellten Position besteht. Mit einer derartigen Klemmvorrichtung 24 kann eine mechanische Fixierung der Aufnahmevorrichtung 6 und/oder des Spindelträgers 19 gegenüber dem Mehrspindel-Bearbeitungskopf 3 erreicht werden. Zum Positionsausgleich der Bearbeitungsachse 7 wird die Klemmvorrichtung 24 gelöst, der Positionsausgleich durchgeführt und anschließend die Klemmvorrichtung 24 wieder aktiviert, um die eingestellte Position dauerhaft zu festigen.

Bevorzugt wird lediglich ein Positionsausgleich in erster 17 und/oder zweiter 22 Wirkrichtung durchgeführt, es werden also immer die nebeneinander liegenden Druckelemente der beiden Paare einer Wirkrichtung mit demselben Druck beaufschlagt. Beispielsweise werden die beiden rechten Druckelemente 16 der zwischen dem Bearbeitungskopf 3 und der Aufnahmevorrichtung 6 angeordneten Druckelemente 16 mit einem höheren Druck beaufschlagt, als die beiden linken Druckelemente. Dadurch wird die Aufnahmevorrichtung 6 relativ zum Bearbeitungskopf 3 nach rechts bewegt und somit der Abstand zwischen den beiden Werkzeugspindeln, parallel zur ersten Wirkrichtung, verringert. Wird nun jedes einzelne Druckelement individuell von einem Druckregelventil angesteuert, kann auch ein Druckunterschied zwischen dem oberen und unteren Druckelement ausgebildet werden, so dass auch eine Verdrehung der Aufnahmevorrichtung 6 möglich ist. Dies ist bspw. dann von Vorteil, wenn in einem Spindelträger 19 mehr als eine Werkzeugspindel 5 angeordnet sind.

Fig. 4 zeigt schematisch dargestellt einen hydraulischen Ansteuerkreis für ein Paar Druckelemente 16. Beispielhaft werden hier die Druckelemente 16 dargestellt, welche zwischen dem Mehrspindel-Bearbeitungskopf und der Aufnahmevorrichtung 6 auf selber erster Wirkrichtung 17 angeordnet sind. Die im Weiteren beschrieben Verhältnisse können unmittelbar auf jedes andere Paar von Druckelementen angewandt werden, insbesondere auf die Druckelemente, die zwischen der Aufnahmevorrichtung und dem Spindelträger auf selber zweiter Wirkrichtung angeordnet sind. Die Druckelemente 16 sind jeweils über eine Druckleitung 13 mit einem Druckregelventil 14 verbunden, welches Druckregelventil 14 wiederum mit einem Druckerzeuger 15 verbunden ist. Das Druckregelventil 14 ist beispielsweise vom Typ 4/3-Wege und ist dazu geeignet die Druckdifferenz in den Dosen derart einzustellen, dass sich eine gewünschte Verschiebung der Aufnahmevorrichtung 6 bzw. des Spindelträgers 19 ergibt. Wie bereits zuvor erwähnt, kann durch eine gleichzeitige Druckbeaufschlagung der gegenüberliegenden Druckelemente 16 unter Ausbildung eines geringfügigen Differenzdruckes eine Positionsverschiebung bei gleichzeitigem Erhalt hoher Steifigkeit erreicht werden, was zumeist das Halten einer Positionsanpassung ohne zusätzliche Klemmvorrichtung ermöglicht.

In den Figuren 2 bis 4 sind Ausführungsvarianten dargestellt, bei denen auf jeweils derselben Wirkrichtung zwei Druckelemente gegenüberliegend angeordnet sind. Durch Einstellen einer Druckdifferenz zwischen diesen beiden Druckelementen, wird eine Verschiebung des dazwischen gehaltenen Elements erreicht. Es ist jedoch auch möglich, dass jeweils eines der beiden Druckelemente durch ein passives Druckelement gebildet ist, beispielsweise durch ein Federelement. Diese Ausführung geht zwar auf Kosten der Steifigkeit des Gesamtsystems, allerdings ergibt sich ein vereinfachter Aufbau.

Mit der gegenständlichen Positionsausgleichsvorrichtung ist ein System geschaffen, welches kostengünstig in der Anschaffung ist, was insbesondere im Hinblick auf einen Einsatz in einem Mehrspindel-Bearbeitungskopf mit einer Mehrzahl von Werkzeugspindeln eine besondere Bedeutung hat. Aus Kostensicht ebenfalls von Vorteil ist eine einfache Durchführbarkeit eines Austausches eines Systems bzw. einer Werkzeugspindel. Durch die Möglichkeit einer permanenten Druckbeaufschlagung wird eine hohe Steifigkeit des Gesamtsystems erreicht. Ferner ist bei entsprechend schneller Druckregelung auch eine hohe Dynamik erzielbar, dass auch dynamische Positionsungenauigkeiten wie Vibrationen, im Betrieb ausgeregelt bzw. kompensiert werden können.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Des Weiteren können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten der Positionsausgleichsvorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

In den Fig. 2 und 3 sind weitere und gegebenenfalls für sich eigenständige Ausführungsform der Aufnahmevorrichtung gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

Der Ordnung halber sei abschließend darauf hingewiesen, dass zum besseren Verständnis des Aufbaus der Positionsausgleichsvorrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1 bis 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Positionsausgleichsvorrichtung
- 2: Werkzeugmaschine
- 3: Mehrspindel-Bearbeitungskopf
- 4: Maschinenrahmen
- 5: Werkzeugspindel

- 6: Aufnahmevorrichtung
- 7: Bearbeitungsachse, z-Achse
- 8: Werkstückträger
- 9: Werkstück
- 10: Werkstückhalterung

- 11: Bearbeitungsachse
- 12: Druckelement
- 13: Druckleitung
- 14: Druckregelventil
- 15: Hydraulischer Druckerzeuger

- 16: Druckelement
- 17: Erste Wirkrichtung, x-Achse
- 18: Rahmen
- 19: Spindelträger
- 20: Druckelement

- 21: Zweite Wirkrichtung, y-Achse
- 22: Rahmen
- 23: Positionserfassungsvorrichtung
- 24: Klemmvorrichtung
- 25: Ebene

## Patentansprüche

1. Werkzeugmaschine (2) mit einer Positionsausgleichvorrichtung (1),
welche Werkzeugmaschine (2) einen Mehrspindel-Bearbeitungskopf (3) und einen Werkstückträger (8) aufweist, welche in einem Maschinenrahmen (4) fixiert angeordnet sind,
wobei der Maschinenrahmen (4) eine Geometrie zwischen Werkstückträger (8) und Mehrspindel-Bearbeitungskopf (3) mit mindestens einer bewegbaren Achse festlegt, wobei im Mehrspindel-Bearbeitungskopf (3) räumlich voneinander distanziert, zumindest zwei Werkzeugspindeln (5) angeordnet sind, von denen zumindest eine Werkzeugspindel (5) in einer Aufnahmevorrichtung (6) angeordnet ist,
wobei der Werkstückträger (8) zumindest eine Werkstückhalterung (10) aufweist, welche ein zu bearbeitendes Werkstück (9) in einer Relativposition zum Werkstückträger (8) aufnimmt,
**dadurch gekennzeichnet, dass**
zwischen zumindest der, durch einen Rahmen (18, 22) gebildeten Aufnahmevorrichtung (6) der Werkzeugspindel (5) und dem Mehrspindel-Bearbeitungskopf (3), mit einer ersten Wirkrichtung (17) parallel zur Ebene des Mehrspindel-Bearbeitungskopfes (3), d.h. parallel zu einer Ebene, aus der die, in den Werkzeugspindeln aufgenommenen Werkzeuge herausragen, ein Druckelement (16) angeordnet ist,
welches Druckelement (16) als hydraulische Druckdose ausgebildet ist.

2. Werkzeugmaschine nach Anspruch 1, **dadurch gekennzeichnet, dass** zwischen der Aufnahmevorrichtung (6) und dem Mehrspindel-Bearbeitungskopf (3), zwei Druckelemente (16) mit derselben ersten Wirkrichtung (17) angeordnet sind, bevorzugt jeweils zwischen der Aufnahmevorrichtung (6) und dem Mehrspindel-Bearbeitungskopf (3).

3. Werkzeugmaschine nach einem der Ansprüche 1 oder 2, **dadurch gekennzeichnet, dass** zwischen dem Rahmen (18, 22) und einem Spindelträger (19) zur Aufnahme der Werkzeugspindel (5), ein in eine zweite Wirkrichtung (21) wirkendes Druckelement (20) angeordnet ist.

4. Werkzeugmaschine nach Anspruch 3, **dadurch gekennzeichnet, dass** das in die zweite Wirkrichtung (21) wirkende Druckelement (20) als hydraulisches Druckelement ausgebildet ist, insbesondere als hydraulische Druckdose.

5. Werkzeugmaschine nach Anspruch 3 oder 4, **dadurch gekennzeichnet, dass** zwischen dem Rahmen (18, 22) und dem Spindelträger (19), zwei Druckelemente (20) mit derselben zweiten Wirkrichtung (21) angeordnet sind, bevorzugt jeweils zwischen dem Rahmen (18, 22) und dem Spindelträger (19).

6. Werkzeugmaschine nach einem der Ansprüche 3 bis 5, **dadurch gekennzeichnet, dass** die zweite Wirkrichtung (21) in der Ebene der ersten Wirkrichtung (17) liegt, wobei die beiden Wirkrichtungen (17, 21) einen Winkel zueinander einschließen, bevorzugt 90°.

7. Werkzeugmaschine nach einem der Ansprüche 2 bis 6, **dadurch gekennzeichnet, dass** zwischen dem Mehrspindel-Bearbeitungskopf (3) und der Aufnahmevorrichtung (6) zwei Paare, an der Aufnahmevorrichtung (6) jeweils gegenüberliegend angeordnete Druckelemente (16) vorhanden sind, wobei deren jeweils erste Wirkrichtung (17) gegeneinander beabstandet ist.

8. Werkzeugmaschine nach einem der Ansprüche 3 bis 7, **dadurch gekennzeichnet, dass** zwischen dem Rahmen (18, 22) und dem Spindelträger (19) zwei Paare, an dem Spindelträger (19) jeweils gegenüberliegend angeordnete Druckelemente (20) vorhanden sind, wobei deren jeweils zweite Wirkrichtung (21) gegeneinander beabstandet ist.

9. Werkzeugmaschine nach einem der Ansprüche 2 oder 5, **dadurch gekennzeichnet, dass** die beiden, auf der ersten (17) und/oder zweiten (21) Wirkrichtung liegenden Druckelemente (16, 20), jeweils mit einem Druckregelventil (14) verbunden sind.

10. Werkzeugmaschine nach einem der Ansprüche 7 oder 8, **dadurch gekennzeichnet, dass** die beiden benachbarten Druckelemente (16, 20) der zwei Paare jeweils über eine gemeinsame Druckleitung mit dem Druckregelventil (14) verbunden sind.

11. Werkzeugmaschine nach einem der Ansprüche 1 bis 10, **dadurch gekennzeichnet, dass** zwischen dem Spindelträger (19) und dem Mehrspindel-Bearbeitungskopf (3) eine Positionserfassungsvorrichtung (23) angeordnet ist.

12. Werkzeugmaschine nach Anspruch 11, **dadurch gekennzeichnet, dass** eine Auswerteschaltung vorhanden ist, welche aus einem dynamisch ermittelten Abstandswert ein Ansteuersignal zur Druckbeaufschlagung eines Druckelements (16, 20) erzeugt.

13. Werkzeugmaschine nach einem der Ansprüche 1 oder 3, **dadurch gekennzeichnet, dass** zwischen der Aufnahmevorrichtung (6) und dem Mehrspindel-Bearbeitungskopf (3) und/oder zwischen dem Spindelträger (19) und dem Mehrspindel-Bearbeitungskopf (3) eine Klemmvorrichtung (24) angeordnet ist.

## Claims

1. A position compensation device (1) in a machine tool (2),
which machine tool (2) has a multi-spindle machining head (3) and a workpiece carrier (8), which are arranged fixedly in a machine frame (4),
wherein the machine frame (4) determines a geometry between workpiece carrier (8) and multi-spindle machining head (3) using at least one movable shaft, wherein at least two tool spindles (5) are arranged spatially distanced from one another in the multi-spindle machining head (3), of which, at least one tool spindle (5) is arranged in an accommodating device (6),
wherein the workpiece carrier (8) has at least one workpiece holder (10), which accommodates a workpiece (9) to be machined in a relative position to the workpiece carrier (8),
**characterised in that**
a pressure element (16) is arranged between at least the accommodating device (6) of the tool spindle (5) formed by a frame (18, 22) and the multi-spindle machining head (3), with a first direction of action (17) parallel to the plane of the multi-spindle machining head (3), i.e. parallel to a plane, out of which the tools accommodated in the tool spindles protrude,
which pressure element (16) is constructed as a hydraulic pressure capsule.

2. The machine tool according to Claim 1, **characterised in that** two pressure elements (16) with the same first direction of action (17) are arranged between the accommodating device (6) and the multi-spindle machining head (3), preferably between the accommodating device (6) and the multi-spindle machining head (3) in each case.

3. The machine tool according to one of Claims 1 or 2, **characterised in that** a pressure element (20) acting in a second direction of action (21) is arranged between the frame (18, 22) and a spindle support (19) for accommodating the tool spindle (5).

4. The machine tool according to Claim 3, **characterised in that** the pressure element (20) acting in the second direction of action (21) is constructed as a hydraulic pressure element, particularly as a hydraulic pressure capsule.

5. The machine tool according to Claim 3 or 4, **characterised in that** two pressure elements (20) with the same second direction of action (21) are arranged between the frame (18, 22) and the spindle support (19), preferably between the frame (18, 22) and the spindle support (19) in each case.

6. The machine tool according to one of Claims 3 to 5, **characterised in that** the second direction of action (21) lies in the plane of the first direction of action (17), wherein the two directions of action (17, 21) enclose an angle relatively to one another, preferably 90°.

7. The machine tool according to one of Claims 2 to 6, **characterised in that** two pairs of pressure elements (16), which are arranged oppositely on the accommodating device (6) in each case, are present between the multi-spindle machining head (3) and the accommodating device (6), wherein the first direction of action (17) thereof is mutually spaced in each case.

8. The machine tool according to one of Claims 3 to 7, **characterised in that** two pairs of pressure elements (20), which are arranged oppositely on the spindle support (19) in each case, are present between the frame (18, 22) and the spindle support (19), wherein the second direction of action (21) thereof is mutually spaced in each case.

9. The machine tool according to one of Claims 2 or 5, **characterised in that** the two pressure elements (16, 20) located on the first (17) and/or second (21) direction of action are connected to a pressure regulating valve (14) in each case.

10. The machine tool according to one of Claims 7 or 8, **characterised in that** the two adjacent pressure elements (16, 20) of the two pairs are in each case connected via a common pressure line to the pressure regulating valve (14).

11. The machine tool according to one of Claims 1 to 10, **characterised in that** a position detecting device (23) is arranged between the spindle support (19) and the multi-spindle machining head (3).

12. The machine tool according to Claim 11, **characterised in that** an evaluation circuit is present, which generates a control signal for pressure loading of a pressure element (16, 20) from a dynamically determined distance value.

13. The machine tool according to one of Claims 1 or 3, **characterised in that** a clamping device (24) is arranged between the accommodating device (6) and the multi-spindle machining head (3) and/or between the spindle support (19) and the multi-spindle machining head (3).

## Revendications

1. Machine-outil (2) avec un dispositif d'équilibrage de position (1), laquelle machine-outil (2) comprend une tête d'usinage multibroche (3) et un support de pièce à usiner (8) disposés de manière fixe dans un châssis de machine (4),
le châssis de machine (4) définissant une géométrie entre le support de pièce à usiner (8) et la tête d'usinage multibroche (3) avec au moins un axe mobile,
au moins deux broches d'outil (5) étant disposées dans la tête d'usinage multibroche (3), espacées l'une de l'autre, dont au moins une broche d'outil (5) est disposée dans un dispositif de réception (6),
le support de pièce à usiner (8) comprenant au moins une fixation de pièce à usiner (10) qui reçoit une pièce à usiner (9) dans une position relative par rapport au support de pièce à usiner (8),
**caractérisée en ce**
**qu'**un élément de pression (16) est disposé au moins entre le dispositif de réception (6), formé par un cadre (18, 22), de la broche d'outil (5) et la tête d'usinage multibroche (3), avec une première direction d'action (17) parallèlement au plan de la tête d'usinage multibroche (3), c'est-à-dire parallèlement à un plan duquel dépassent les outils reçus dans les broches d'outil,
lequel élément de pression (16) est réalisé sous la forme d'une prise de pression hydraulique.

2. Machine-outil selon la revendication 1, **caractérisée en ce que** deux éléments de pression (16) avec la même première direction d'action (17) sont disposés entre le dispositif de réception (6) et la tête d'usinage multibroche (3), chacun de préférence entre le dispositif de réception (6) et la tête d'usinage multibroche (3).

3. Machine-outil selon la revendication 1 ou 2, **caractérisée en ce qu'**un élément de pression (20) agissant dans une deuxième direction d'action (21) est disposé entre le cadre (18, 22) et un support de broche (19) pour la réception de la broche d'outil (5).

4. Machine-outil selon la revendication 3, **caractérisée en ce que** l'élément de pression (20) agissant dans la deuxième direction (21) est réalisé sous la forme d'un élément de pression hydraulique, notamment comme prise de pression hydraulique.

5. Machine-outil selon la revendication 3 ou 4, **caractérisée en ce que** deux éléments de pression (20) avec la même deuxième direction d'action (21) sont disposés entre le cadre (18, 22) et le support de broche (19), chacun de préférence entre le cadre (18, 22) et le support de broche (19).

6. Machine-outil selon l'une des revendications 3 à 5, **caractérisée en ce que** la deuxième direction d'action (21) est située dans le plan de la première direction d'action (17), les deux directions d'action (17, 21) enfermant entre elles un angle, de préférence de 90°.

7. Machine-outil selon l'une des revendications 2 à 6, **caractérisée en ce que** deux paires d'éléments de pression (16), disposés sur le dispositif de réception (6) l'un en face de l'autre, sont disposés entre la tête d'usinage multibroche (3) et le dispositif de réception (6), leurs premières directions d'action (17) respectives étant espacées l'une de l'autre.

8. Machine-outil selon l'une des revendications 3 à 7, **caractérisée en ce que** deux paires d'éléments de pression (20), disposés sur le support de broche (19) l'un en face de l'autre, sont disposés entre le cadre (18, 22) et le support de broche (19, leurs deuxièmes directions d'action (21) respectives étant espacées l'une de l'autre.

9. Machine-outil selon l'une des revendications 2 ou 5, **caractérisée en ce que** chacun des deux éléments de pression (16, 20) situés sur la première (17) et/ou la deuxième (21) direction d'action est relié à une valve de régulation de pression (14).

10. Machine-outil selon l'une des revendications 7 ou 8, **caractérisée en ce que** les deux éléments de pression avoisinants (16, 20) des deux paires sont reliés à la valve de régulation de pression (14) par un conduit de pression commun.

11. Machine-outil selon l'une des revendications 1 à 10, **caractérisée en ce qu'**un dispositif de reconnaissance de position (23) est disposé entre le support de broche (19) et la tête d'usinage multibroche (3).

12. Machine-outil selon la revendication 11, **caractérisée en ce qu'**il est prévu un circuit d'exploitation qui engendre un signal de commande pour appliquer une pression sur un élément de pression (16, 20) en fonction d'une valeur de distance déterminée de manière dynamique.

13. Machine-outil selon l'une des revendications 1 ou 3, **caractérisée en ce qu'**un dispositif de serrage (24) est disposé entre le dispositif de réception (6) et la tête d'usinage multibroche (3) et/ou entre le support de broche (19) et la tête d'usinage multibroche (3).
